# FASCICULE DE BREVET EUROPEEN

(11) **EP 4 330 096 B1**
(45) Date de publication et mention de la délivrance du brevet: **23.04.2025**
(21) Numéro de dépôt: 22717636.9
(22) Date de dépôt: 24.03.2022
(51) Int. Cl.: B60W 10/08, B60W 30/165, G05D 1/00, G08G 1/00, F02N 11/00

(54) **PROCÉDÉ ET DISPOSITIF DE CONTRÔLE D'UN SYSTÈME D'ARRÊT-DÉMARRAGE AUTOMATIQUE DE MOTEUR DANS UN GROUPEMENT DE VÉHICULES PAR PELOTON**
VERFAHREN UND VORRICHTUNG ZUR STEUERUNG EINES AUTOMATISCHEN MOTORSTOPP-START-SYSTEMS IN EINER FAHRZEUGKOLONNE
METHOD AND DEVICE FOR CONTROLLING AN AUTOMATIC ENGINE STOP-START SYSTEM IN A PLATOON OF VEHICLES

(30) Priorité: 30.04.2021 FR 2104557
(43) Date de publication de la demande: 06.03.2024
(73) Titulaire: Stellantis Auto SAS, 78300 Poissy (FR)
(72) Inventeur: NDOYE, Mamadou Moustapha, 91120 PALAISEAU (FR)
(74) Mandataire: ESIP
(86) Numéro de dépôt international: PCT/FR2022/050546
(87) Numéro de publication internationale: WO 2022/229534

(56) Documents cités:
- EP-A1- 2 592 261
- EP-A1- 3 285 129
- WO-A1-2018/117942
- FR-A1- 3 100 196

## Description

La présente invention revendique la priorité de la demande française 2104557 déposée le 30.04.2021.

### Domaine technique

L'invention concerne les procédés et dispositifs de contrôle de système d'arrêt-démarrage automatique, dit système STT (de l'anglais « Stop and Start » ou en français « Arrêt & démarrage ») de moteur d'un véhicule, notamment automobile. L'invention concerne également les procédés et dispositifs de communication pour véhicule dans un groupement de véhicules par peloton (de l'anglais « platooning »).

### Arrière-plan technologique

Avec l'augmentation du nombre de véhicules circulant sur les routes, l'encombrement du réseau routier et la sécurité routière deviennent des sujets de préoccupation importants. Pour réduire l'encombrement du réseau routier et améliorer la sécurité sans multiplier les routes, la méthode dite de groupement de véhicules par peloton (aussi appelée convoi routier ou train de véhicules) permet de raccourcir la distance entre les véhicules grâce à une communication accrue entre ces véhicules. Le rapprochement des véhicules circulant sur une route donnée permet de multiplier les débits jusqu'à 5 fois. En parallèle, la sécurité est améliorée grâce à une réduction des temps de réaction rendue possible par de nouveaux moyens de communication et assistance de la conduite gérée électroniquement.

Les nouvelles technologies de communication apparues récemment permettent l'échange d'informations entre les véhicules et/ou entre les véhicules et l'infrastructure qui les entoure. Ainsi, de nouvelles technologies de l'information et de la communication appliquées au domaine des transports sont apparues, telles que l'ITS G5 (de l'anglais « Intelligent Transportation System G5 » ou en français « Système de transport intelligent G5 ») en Europe ou DSRC (de l'anglais « Dedicated Short Range Communications » ou en français « Communications dédiées à courte portée ») aux Etats-Unis d'Amérique qui reposent tous les deux sur le standard IEEE 802.11p ou encore la technologie basée sur les réseaux cellulaires nommée C-V2X (de l'anglais « Cellular - Vehicle to Everything » ou en français « Cellulaire - Véhicule vers tout ») qui s'appuie sur la 4G basé sur LTE (de l'anglais « Long Term Evolution » ou en français « Evolution à long terme ») et bientôt la 5G.

En parallèle, le développement de systèmes STT permet d'arrêter temporairement le fonctionnement du moteur d'un véhicule, notamment lors d'arrêts momentanés de la circulation, par exemple lors d'embouteillages. De tels systèmes permettent ainsi de réduire la consommation de carburant du véhicule ainsi que ses émissions de CO₂ tout en permettant un redémarrage rapide du véhicule dès que nécessaire.

Le fonctionnement des systèmes STT se gère cependant à l'échelle individuelle d'un véhicule, et n'est pas adapté à une circulation à l'intérieur d'un groupement de véhicules par peloton.

On connait du document WO2018/117942 A1 un procédé d'activation et/ou de désactivation d'un moteur respectif de chaque véhicule dans un groupe de véhicules.

### Résumé de l'invention

Un objet de la présente invention est d'améliorer la situation décrite ci-dessus.

Un autre objet de la présente invention est de proposer un procédé de contrôle de système d'arrêt-démarrage automatique dans un groupement de véhicules anticipatif vis-à-vis de l'environnement.

Selon un premier aspect, l'invention concerne un procédé de contrôle de système d'arrêt-démarrage automatique de moteur dans un groupement de véhicules par peloton, le procédé comprenant les étapes suivantes :
- réception, par un premier véhicule du groupement selon un mode de communication de type véhicule vers tout, dit V2X, de premières informations représentatives de cinématique d'au moins un deuxième véhicule du groupement ;
- obtention, par le premier véhicule, de deuxièmes informations représentatives d'un environnement du groupement ;
- transmission, par le premier véhicule à destination de l'au moins un deuxième véhicule via le mode de communication V2X, d'au moins une requête de contrôle de système d'arrêt-démarrage automatique de moteur en fonction des premières informations et des deuxièmes informations.

Selon une variante, la requête de contrôle correspond à :
- une requête d'arrêt moteur ; ou
- une requête de démarrage moteur.

Selon une autre variante, les deuxièmes informations appartiennent à un ensemble d'informations comprenant :
- une information représentative d'un état d'un feu de signalisation ; et
- une information représentative de détection de véhicules environnants.

Selon une variante supplémentaire, l'obtention comprend :
- une détermination des deuxièmes informations à partir de données reçues d'au moins un capteur intégré au premier véhicule ; et/ou
- une réception, depuis l'au moins un deuxième véhicule, des deuxièmes informations selon le mode de communication V2X.

Selon encore une variante, le procédé comprend en outre les étapes suivantes :
- obtention, par le deuxième véhicule, de troisièmes informations représentatives d'autorisation du contrôle du système d'arrêt-démarrage automatique de moteur, les troisièmes informations étant obtenues de systèmes embarqués dans le deuxième véhicule ; et
- contrôle, par le deuxième véhicule, du système d'arrêt-démarrage automatique de moteur du deuxième véhicule en fonction de la requête et des troisièmes informations.

Selon une autre variante, le procédé comprend une étape de transmission des troisièmes informations par le deuxième véhicule à destination du premier véhicule via le mode de communication V2X.

Selon une variante additionnelle, dans lequel la requête de contrôle correspond à la requête d'arrêt moteur, le procédé comprenant en outre les étapes suivantes :
- réception, par le deuxième véhicule, d'une requête interne de démarrage moteur, la requête interne étant émise par au moins un système embarqué du deuxième véhicule ; et
- contrôle, par le deuxième véhicule, du démarrage moteur en fonction de la requête interne.

Selon un deuxième aspect, l'invention concerne un dispositif de contrôle de système d'arrêt-démarrage automatique de moteur dans un groupement de véhicules par peloton, le dispositif comprenant une mémoire associée à au moins un processeur configuré pour la mise en œuvre des étapes du procédé selon le premier aspect de l'invention.

Selon un troisième aspect, l'invention concerne un véhicule, par exemple de type automobile, comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect non revendiqué, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre de façon schématique un groupement de véhicules par peloton, selon un exemple de réalisation particulier de la présente invention ;
[Fig. 2] illustre schématiquement un dispositif embarqué dans un véhicule du groupement de véhicules de la figure 1 et configuré pour le contrôle de système d'arrêt-démarrage automatique de moteur dans le groupement de véhicules de la figure 1, selon un exemple de réalisation de la présente invention ; et
[Fig. 3] illustre un organigramme des différentes étapes d'un procédé de contrôle de système d'arrêt-démarrage automatique de moteur dans le groupement de véhicules de la figure 1, selon un exemple de réalisation particulier de la présente invention.

### Description des modes de réalisation

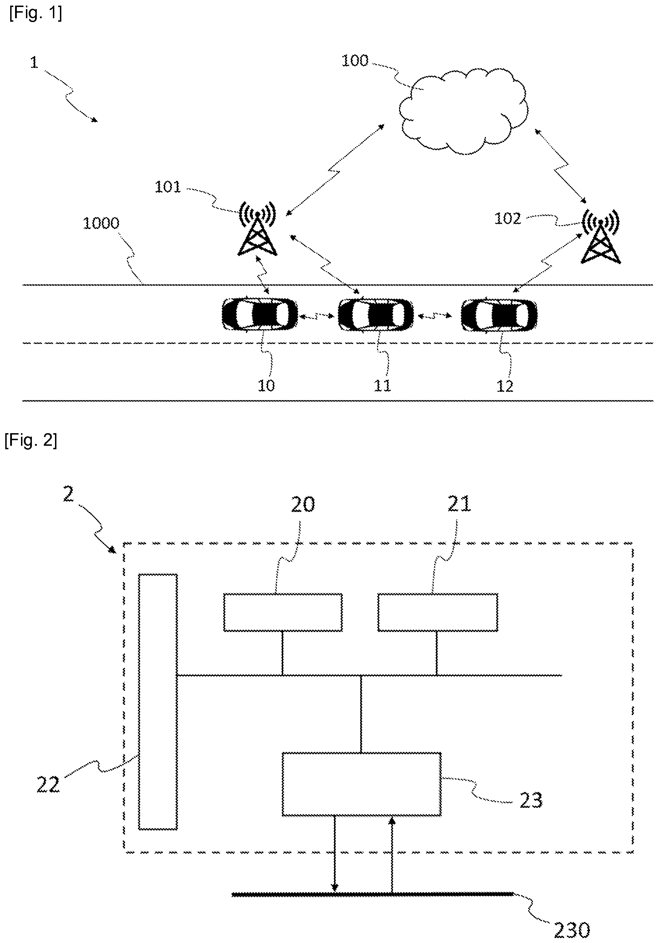

Un procédé et un dispositif de contrôle de système d'arrêt-démarrage automatique de moteur dans un groupement de véhicules par peloton vont maintenant être décrits dans ce qui va suivre en référence conjointement aux figures 1 à 3. Des mêmes éléments sont identifiés avec des mêmes signes de référence tout au long de la description qui va suivre.

Selon un exemple de réalisation particulier et non limitatif de réalisation de l'invention, un procédé de contrôle de système d'arrêt-démarrage automatique de moteur dans un groupement de véhicules par peloton comprend la réception, par un premier véhicule du groupement de véhicules, de premières informations représentatives de cinématique d'au moins un deuxième véhicule du groupement de véhicules. Le premier véhicule et l'au moins un deuxième véhicule sont avantageusement en communication selon un mode de communication de type véhicule vers tout, dit V2X (de l'anglais « Vehicle-to-Everything »), les premières informations étant transmises selon le mode de communication V2X. Le premier véhicule reçoit par exemple des premières informations représentatives de la vitesse de chaque deuxième véhicule du groupement de véhicules, ou encore des premières informations représentatives d'une vitesse et/ou d'une accélération et/ou de l'enclenchement d'un système de freinage de chaque deuxième véhicule du groupement de véhicules.

Le premier véhicule obtient également des deuxièmes informations représentatives d'un environnement du groupement, par exemple des deuxièmes informations reçues de capteurs embarqués du premier véhicule et/ou reçues selon le mode de communication V2X.

Le premier véhicule transmet alors, à destination de l'au moins un deuxième véhicule, par exemple à destination de l'ensemble des véhicules du groupement de véhicules, au moins une requête de contrôle de système d'arrêt-démarrage automatique de moteur selon les premières et deuxièmes informations.

La transmission de la requête de contrôle permet ainsi au premier véhicule de gérer les systèmes d'arrêt-démarrage automatique de moteur de chaque véhicule du groupement de véhicules à partir d'une pluralité d'informations. Les systèmes d'arrêt-démarrage automatique de moteur sont ainsi contrôlés de manière commune dans le groupement, par exemple de manière synchronisée, à partir d'une quantité supérieure d'informations.

[Fig. 1] illustre schématiquement un environnement routier 1 associé à un réseau de communication de type V2X, selon un exemple de réalisation particulier et non limitatif de la présente invention.

La figure 1 illustre un groupement de véhicules 10, 11, 12, par exemple de véhicules automobiles, circulant sur une voie de circulation d'une route 1000. Selon d'autres exemple, les véhicules 10, 11, 12 correspondent à des cars, des bus, des camions, des véhicules utilitaires ou des motocyclettes, c'est-à-dire des véhicules de type terrestres motorisés. Les véhicules 10, 11, 12 forment un peloton (de l'anglais « platoon ») ou train de véhicules ou convoi routier. Un tel groupement de véhicules par peloton est permis grâce à un système autoroutier automatisé (aussi appelé route futée) qui correspond à un système de transport intelligent conçu pour permettre la circulation de véhicules sans conducteur sur des routes dédiées, ces véhicules circulant dans un mode de conduite autonome sans intervention du conducteur. Le groupement de véhicules 10, 11, 12 comprend par exemple un véhicule meneur 10 (appelé premier véhicule) correspondant par exemple au véhicule situé à l'avant du convoi selon le sens de circulation de la voie de circulation, en communication avec les autres véhicules 11, 12 (appelés deuxièmes véhicules).

Le premier véhicule 10 et les deuxièmes véhicules 11, 12 appartenant au groupement embarquent chacun un système associé à des détecteurs et à un système de communication V2X autorisant un mode de conduite autonome. Un véhicule autorisant un tel mode de conduite autonome doit avoir un niveau de conduite autonome au moins égal à 3, que ce soit dans la classification éditée par l'agence fédérale chargée de la sécurité routière aux USA qui comprend 5 niveaux ou dans la classification éditée par l'organisation internationale des constructeurs automobiles qui comprend 6 niveaux.

Les 5 niveaux de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

La classification de l'organisation internationale des constructeurs automobiles est semblable à celle listée ci-dessus, à la différence près qu'elle comporte 6 niveaux, le niveau 3 de la classification américaine étant divisé en 2 niveaux dans celle de l'organisation internationale des constructeurs automobiles.

Selon un premier exemple de réalisation, le premier véhicule 10 et les deuxièmes véhicules 11, 12 sont des véhicules de niveau 3 ou plus.

Selon un deuxième exemple de réalisation, le premier véhicule 10 est un véhicule de niveau 3 ou plus et les deuxièmes véhicules 11, 12 sont de niveau 1 ou 2 et au minimum équipés d'un régulateur de vitesse adaptatif.

En accord avec le concept sous-jacent de l'invention, le premier véhicule 10 et les deuxièmes véhicules 11, 12 embarquent également chacun un système STT tel que décrit ci-avant.

Chaque véhicule 10 à 12 est avantageusement équipé d'un dispositif de communication pour transmettre et recevoir des données à destination d'un autre véhicule et/ou d'un serveur d'une infrastructure réseau. Chaque dispositif de communication peut être assimilé à un nœud d'un réseau, par exemple un réseau sans fil ad hoc.

Le premier véhicule 10 et les deuxièmes véhicules 11, 12 communiquent avantageusement en utilisant le système de communication V2X, par exemple basé sur les standards 3GPP LTE-V ou IEEE 802.11p de ITS G5. Dans un tel système de communication V2X, chaque véhicule embarque un nœud pour permettre une communication de véhicule à véhicule V2V (de l'anglais « vehicle-to-vehicle »), de véhicule à infrastructure V2I (de l'anglais « vehicle-to-infrastructure ») et/ou de véhicule à piéton V2P (de l'anglais « vehicle-to-pedestrian »), les piétons étant équipés de dispositifs mobiles (par exemple un téléphone intelligent (de l'anglais « Smartphone »)) configurés pour communiquer avec les véhicules.

L'infrastructure du réseau comprend par exemple des dispositifs de communication 101, 102, chaque dispositif 101, 102 correspondant par exemple à une antenne d'un réseau cellulaire de type LTE 4G ou 5G ou à une UBR (« Unité Bord de Route »), chacune correspondant à un nœud du réseau, en plus des nœuds équipant les véhicules ou les piétons.

Selon un exemple particulier de réalisation, l'ensemble des nœuds (c'est-à-dire les dispositifs de communications associés aux véhicules 10 à 12 et les antennes ou UBR 101, 102) du réseau forme par exemple un réseau sans fil ad hoc (aussi appelé WANET (de l'anglais « Wireless Ad Hoc Network ») ou MANET (de l'anglais « Mobile Ad Hoc Network »)), correspondant à un réseau sans fil décentralisé. Le réseau sans fil ad hoc correspond avantageusement à un réseau véhiculaire ad hoc (ou VANET, de l'anglais « Vehicular Ad hoc NETwork ») ou à un réseau véhiculaire ad hoc intelligent (ou InVANET, de l'anglais « Intelligent Vehicular Ad hoc NETwork »), aussi appelé réseau « GeoNetworking ». Dans un tel réseau, 2 véhicules ou plus embarquant chacun un nœud peuvent communiquer entre eux dans le cadre d'une communication véhicule à véhicule V2V (de l'anglais « vehicle-to-vehicle ») ; chaque véhicule peut communiquer avec l'infrastructure mise en place dans le cadre d'une communication véhicule à infrastructure V2I (de l'anglais « vehicle-to-infrastructure ») ; chaque véhicule peut communiquer avec un ou des piétons équipés de dispositifs mobiles dans le cadre d'une communication véhicule à piéton V2P (de l'anglais « vehicle-to-pedestrian »).

Les nœuds correspondants aux antennes (ou UBR) 101 et 102 sont avantageusement reliés à un ou plusieurs serveurs distants ou au « cloud » 100 (ou en français « nuage ») via une connexion filaire et/ou sans fil. Les antennes ou UBR 101 et 102 peuvent ainsi faire office de relais entre le « cloud » 100 et le premier véhicule 10 et/ou chaque deuxième véhicule 11, 12 appartenant au groupement de véhicules par peloton.

Dans une première opération, le premier véhicule 10 reçoit des premières informations représentatives de cinématique d'au moins un deuxième véhicule 11, 12 du groupement, par exemple des premières informations représentatives d'une vitesse et/ou d'une accélération et/ou d'un freinage de chaque deuxième véhicule 11, 12. Les premières informations sont avantageusement transmises au premier véhicule 10 par les deuxièmes véhicules 11, 12 selon un mode de communication de type V2V, par exemple selon un mode de communication direct. Les premières informations sont par exemple transmises par le deuxième véhicule 12 au deuxième véhicule 11 qui est le deuxième véhicule du groupement de véhicules situé entre le deuxième véhicule 12 et le premier véhicule 10, puis du deuxième véhicule 11 au premier véhicule 10.

Un mode de communication directe est par exemple conforme à :
- ITS G5 en Europe ou DSRC (de l'anglais « Dedicated Short Range Communications » ou en français « Communications dédiées à courte portée ») aux Etats-Unis d'Amérique, qui reposent tous les deux sur le standard IEEE 802.11p ; ou
- LTE-V Mode 4 (de l'anglais « Long-Term Evolution - Vehicle Mode 4 » ou en français « Evolution à long terme - véhicule Mode 4 ») qui permet des communications V2V, aussi appelées communications « sidelink » (ou en français « liaison latérale ») basées sur une interface de communication directe de LTE appelée PC5 ; une telle technologie est décrite par exemple dans l'article intitulé « Analytical Models of the Performance of C-V2X Mode 4 Vehicular Communications », écrit par Manuel Gonzalez-Martin, Miguel Sepulcre, Rafael Molina-Masegosa et Javier Gozalvez, et publié en 2018.

Selon une variante, les premières informations sont transmises par les deuxièmes véhicules 11, 12 au premier véhicule 10 par l'intermédiaire des antennes ou UBR 101, 102, par exemple à l'intérieur d'un réseau sans fil ad hoc tel que décrit ci-avant.

Dans une deuxième opération, le premier véhicule obtient des deuxièmes informations représentatives d'un environnement du groupement, par exemple de la route 1000.

Selon une variante de réalisation, les deuxièmes informations sont déterminées à partir de données d'environnement reçues par un ou plusieurs capteurs de système(s) de détection d'objet embarqués dans le premier véhicule 10, ce ou ces systèmes faisant par exemple partie d'un système d'aide à la conduite, dit ADAS (de l'anglais « Advanced Driver-Assistance System » ou en français « Système d'aide à la conduit avancé ») du premier véhicule 10. A titre d'exemple, le ou les capteurs associés à ces systèmes de détection d'objet correspondent à un ou plusieurs des capteurs suivants :
- un ou plusieurs radars à ondes millimétriques arrangés sur le premier véhicule 10, par exemple à l'avant, à l'arrière, sur chaque coin avant/arrière du premier véhicule 10 ; chaque radar étant adapté pour émettre des ondes électromagnétiques et pour recevoir les échos de ces ondes renvoyées par un ou plusieurs objets, dans le but de détecter des obstacles et leurs distances vis-à-vis du premier véhicule 10 ; et/ou
- un ou plusieurs LIDAR(s), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données d'environnement correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le premier véhicule 10 embarquant le capteur. Lorsqu'il s'agit d'une caméra vidéo, les données d'environnement correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »).

Selon une autre variante, les deuxièmes informations sont reçues par le premier véhicule 10 par communication avec les deuxièmes véhicules 11 ,12 selon le mode de communication V2X. Les deuxièmes véhicules 11, 12 embarquent par exemple des capteurs tels que décrits ci-avant, leur permettant chacun de générer au moins une deuxième information, l'ensemble des deuxièmes informations étant transmises au premier véhicule 10 selon le mode de communication V2X.

Selon encore une variante, les deuxièmes informations sont reçues par communication du premier véhicule 10 avec un serveur du « cloud » 100, par exemple un serveur appartenant à un gestionnaire de route, à un service de navigation ou encore une base de données communautaire, par l'intermédiaire de l'antenne ou UBR 101 via une liaison sans fil selon un mode de communication de type V2I.

Bien évidemment, il est possible que les deuxièmes informations soient obtenues par le premier véhicule 10 par combinaison d'informations reçues des deuxièmes véhicules 11, 12 et/ou de capteurs embarqués du premier véhicule 10 et/ou d'un serveur du « cloud » 100.

Les deuxièmes informations comprennent ainsi une pluralité d'informations permettant au premier véhicule 10 de détecter par exemple une fenêtre d'arrêt momentané du groupement de véhicules ou la fin d'une telle fenêtre d'arrêt momentané, par exemple un ensemble d'informations comprenant :
- une information représentative d'un état d'un feu de signalisation, par exemple un état combiné à une position d'un feu de signalisation indiquant un feu rouge devant le groupement de véhicules, selon son sens de circulation sur la route 1000, ou encore un changement d'un feu sur une autre voie d'un carrefour sur la route 1000 ; et
- une information représentative de détection de véhicules environnants, par exemple une information indiquant la présence de véhicules environnants à l'arrêt ou en circulation à une vitesse donnée, les véhicules environnants étant situés devant le groupement de véhicules selon son sens de circulation sur la route 1000.

Selon un autre exemple, les deuxièmes informations permettent de détecter une pente de la route 1000 indiquant que le groupement de véhicules se situe dans une descente et que la vitesse du groupement de véhicules peut être contrôlée sans nécessiter de fonctionnement moteur.

A partir des premières informations et des deuxièmes informations, le premier véhicule 10 transmet dans une troisième opération au moins une requête de contrôle de système d'arrêt-démarrage automatique de moteur. Cette requête est avantageusement transmise aux deuxièmes véhicules 11, 12 via le mode de communication V2X, par exemple selon une des variantes de réalisation décrites ci-avant ou encore à l'ensemble des deuxièmes véhicules 11, 12 formant le groupement de véhicules, par exemple en mode multicast. Bien évidemment, le premier véhicule 10 contrôle par exemple son système STT embarqué en fonction de la requête de contrôle, laquelle est par exemple transmise en parallèle au calculateur du système STT du premier véhicule 10 lors du sa transmission aux deuxièmes véhicules 11, 12. Le premier véhicule 10 met par exemple également en œuvre les étapes du procédé à l'instar des deuxièmes véhicules 11, 12 selon les variantes de réalisation décrites ci-après.

Selon un exemple de réalisation, la requête de contrôle correspond à une requête d'arrêt moteur ou une requête de démarrage moteur, c'est-à-dire à une requête venant supplanter au moins partiellement le système STT du ou des deuxièmes véhicules 11, 12 et permettant de commander l'arrêt moteur ou le démarrage moteur en particulier avant que le système STT de chaque deuxième véhicule 11, 12 ne le commande de manière autonome, ou encore de manière coordonnée à l'intérieur du groupement de véhicules.

Selon une variante, chacun des deuxièmes véhicules 11, 12 obtient, dans une quatrième opération, des troisièmes informations représentatives d'autorisation du contrôle du système d'arrêt-démarrage automatique de moteur et contrôle, dans une cinquième opération, le système d'arrêt-démarrage automatique de moteur en fonction de la requête et des troisièmes informations.

Chacun des deuxièmes véhicules 11, 12 embarque par exemple un calculateur associé à un système STT du deuxième véhicule 11, 12, par exemple un calculateur central de type boîtier de servitude intelligent ou BSI (en anglais « Built-in Systems Interface ») ou encore VSM (de l'anglais « Vehicle Supervisor Module » ou en français « Module de Supervision de Véhicule ») apte à former un réseau de communication, par exemple un réseau de communication multiplexé, dans lequel des données sont transmises via une liaison sans fil ou filaire, par exemple des données reçues selon le mode de communication V2X comprenant la requête de contrôle et des données reçues de calculateurs périphériques du deuxième véhicule 11, 12 comprenant les troisièmes informations. Selon un autre exemple, le système STT de chacun des deuxièmes véhicules 11, 12 est associé à un autre calculateur périphérique en communication avec le BSI ou VSM, par exemple le calculateur moteur ou un calculateur système STT spécifiquement associé au système STT.

Les calculateurs périphériques du deuxième véhicule 11, 12 sont par exemple associés à une pluralité de systèmes embarqués du deuxième véhicule 11, 12 et renvoient des troisièmes informations permettant de valider l'arrêt moteur et/ou le démarrage moteur en sécurité à un instant donné, par exemple des troisièmes informations appartenant à un ensemble d'informations comprenant :
- une information représentative d'une température ambiante, l'arrêt moteur étant par exemple déconseillé pour une température ambiante en dessous ou au-dessus d'une valeur seuil ; et
- une information représentative d'un état d'un système de dégivrage et/ou d'un système de désembuage, l'arrêt moteur étant par exemple déconseillé lors du fonctionnement de tels systèmes ; et
- une information représentative d'un état d'un groupe motopropulseur, le groupe motopropulseur ne pouvant par exemple pas effectuer d'arrêt moteur en cours de démarrage moteur, ou vice-versa ; et
- une information représentative d'un niveau de batterie, par exemple d'un niveau de batterie en-dessous d'une valeur seuil de sécurité, le démarrage moteur suivant un arrêt moteur consommant une quantité d'énergie donnée.

On comprend ici que les troisièmes informations permettent de compléter les premières et deuxièmes informations pour la mise en œuvre effective de la requête de contrôle, par exemple afin d'effectuer une double vérification au niveau du groupement de véhicules et du véhicule individuel, ou encore afin de répartir les décisions de contrôle « collectives » déterminées à partir de conditions représentatives du groupement de véhicules et de sa situation sur la route 1000, d'une mise en œuvre individuelle du contrôle à partir de conditions spécifiques à chacun des deuxièmes véhicules 11, 12. La cinquième opération ne se déclenche par exemple que lorsque l'ensemble des troisièmes informations permettent d'autoriser le contrôle du deuxième véhicule 11, 12, c'est-à-dire que chaque système du deuxième véhicule 11, 12 autorise l'arrêt moteur ou le démarrage moteur. En d'autres termes, les troisièmes informations sont représentatives d'un état de disponibilité du système STT de chaque deuxième véhicule 11, 12.

Optionnellement, chacun des deuxièmes véhicules 11, 12 transmet les troisièmes informations à destination du premier véhicule 10, par exemple via le mode de communication V2X décrit ci-avant. Les troisièmes informations indiquent par exemple une indisponibilité du système STT lors de la réception de la requête de contrôle, le deuxième véhicule 11, 12 faisant remonter les troisièmes informations pour avertir le premier véhicule 10 de l'impossibilité de contrôler le système STT en fonction de la requête. Dans un autre exemple, les troisièmes informations indiquent la disponibilité du système STT, le deuxième véhicule 11, 12 confirmant au premier véhicule 10 la réception de la requête de contrôle et sa mise en œuvre par transmission des troisièmes informations.

Selon encore une variante, la requête de contrôle est une requête d'arrêt moteur telle qu'énoncée ci-avant et le deuxième véhicule 11, 12 reçoit, dans une sixième opération ultérieure à une cinquième opération (dans laquelle le moteur a été par conséquent arrêté), une requête interne de démarrage moteur émise par au moins un système embarqué du deuxième véhicule. En fonction de la requête interne, le deuxième véhicule 11, 12 contrôle le démarrage moteur dans une septième opération, c'est-à-dire qu'il met en œuvre un démarrage moteur indépendamment de la requête d'arrêt moteur reçue en V2X précédemment.

Le BSI du deuxième véhicule 11, 12 reçoit par exemple une requête interne de démarrage moteur d'un calculateur périphérique associé à un système embarqué du deuxième véhicule 11, 12, par exemple un des systèmes embarqués décrits ci-avant ou encore un autre système embarqué du deuxième véhicule 11, 12. La requête interne résulte par exemple :
- d'une activation d'un système de dégivrage, d'un système de désembuage ou de tout autre système nécessitant le fonctionnement du moteur du deuxième véhicule 11, 12 ; ou
- d'une baisse du niveau de batterie en dessous d'une valeur seuil, par exemple d'une valeur seuil de niveau de batterie permettant encore un démarrage moteur selon une marge de sécurité ; ou
- d'un démarrage manuel du moteur selon une commande du conducteur du deuxième véhicule 11, 12, par exemple par interaction du conducteur avec une interface du deuxième véhicule 11, 12 ou par dissociation du deuxième véhicule 11, 12 du groupement de véhicules.

Bien évidemment, au contraire des quatrièmes et cinquièmes opérations, la requête interne peut être émise dans la sixième opération et mener à un contrôle en septième opération à partir d'un seul système embarqué du deuxième véhicule 11, 12, indépendamment des autres systèmes embarqués, de manière à permettre un démarrage moteur dans une pluralité de conditions.

Optionnellement, la septième opération comporte également une sous étape d'obtention de quatrièmes informations représentatives d'autorisation du contrôle du système d'arrêt-démarrage automatique de moteur, par exemple similaire à la quatrième opération et aux troisièmes informations, de manière à assurer que les systèmes embarqués du deuxième véhicule 11, 12 autorisent le démarrage moteur.

Ainsi, le système STT de chaque véhicule d'un groupement de véhicules par peloton peut être contrôlé de manière synchronisée à l'intérieur du groupement de véhicules, tout en mutualisant les informations issues de chaque véhicule du groupement de véhicules pour améliorer le contrôle et augmenter les opportunités d'arrêt moteur et par conséquent réduire la consommation d'énergie et les émissions de CO₂ du groupement de véhicules.

[Fig.2] illustre schématiquement un dispositif 2 configuré pour le contrôle de système d'arrêt-démarrage automatique de moteur dans un groupement de véhicules par peloton, par exemple dans le groupement de véhicules mené par le premier véhicule 10. Le dispositif 2 correspond par exemple à un dispositif embarqué dans le premier véhicule 10, par exemple un calculateur. Selon un autre exemple, le dispositif 2 correspond à un dispositif embarqué dans le deuxième véhicule 11, 12. Le dispositif 2 est par exemple configuré pour transmettre et/ou recevoir des données selon une liaison de type V2X et/ou une liaison filaire et/ou contrôler un système STT.

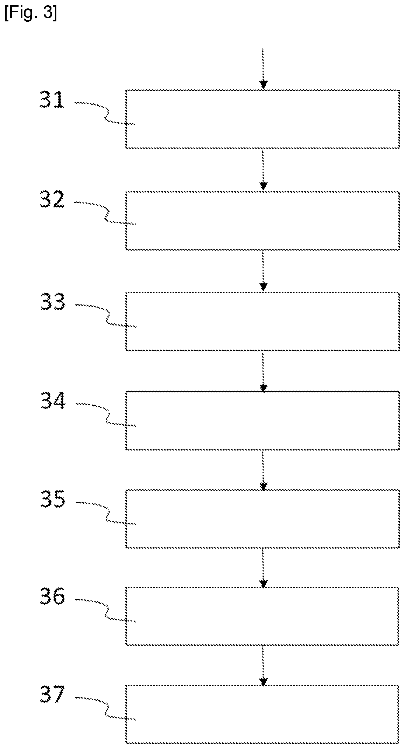

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés et/ou à l'intérieur d'un réseau de communication multiplexé du premier véhicule 10.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon un mode de réalisation particulier et non limitatif, le dispositif 2 comprend un bloc 22 d'éléments d'interface pour communiquer avec des dispositifs externes, par exemple un serveur distant ou le « cloud » 100, d'autres nœuds du réseau ad hoc. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 2 fournit des signaux de sortie à un ou plusieurs dispositifs externes, tels qu'un système de réalité augmentée, un écran d'affichage, un ou des haut-parleurs et/ou d'autres périphériques via respectivement des interfaces de sortie non représentées.

[Fig. 3] illustre un organigramme des différentes étapes d'un procédé de contrôle de système d'arrêt-démarrage automatique de moteur dans un groupement de véhicules par peloton, selon un exemple de réalisation particulier et non limitatif de la présente invention.

Dans une première étape 31, des premières informations représentatives de cinématique d'au moins un deuxième véhicule du groupement de véhicules sont reçues par un premier véhicule du groupement de véhicules selon un mode de communication V2X.

Dans une deuxième étape 32, des deuxièmes informations représentatives d'un environnement du groupement sont obtenues par le premier véhicule.

Dans une troisième étape 33 se déclenchant en fonction des premières informations et des deuxièmes informations, une requête de contrôle de système d'arrêt-démarrage automatique de moteur est transmise par le premier véhicule à destination du deuxième véhicule.

Dans une quatrième étape 34 optionnelle, des troisièmes informations représentatives d'autorisation du contrôle du système d'arrêt-démarrage automatique de moteur sont obtenues par le deuxième véhicule à partir de systèmes embarqués dans le deuxième véhicule.

Dans une cinquième étape 35 se déclenchant en fonction de la requête de contrôle et des troisièmes informations, le système d'arrêt-démarrage automatique de moteur du deuxième véhicule est contrôlé par le deuxième véhicule.

Dans une sixième étape 36 optionnelle, la requête de contrôle correspondant à une requête d'arrêt moteur, une requête interne de démarrage moteur est reçue par le deuxième véhicule à partir d'au moins un système embarqué du deuxième véhicule.

Dans une septième étape 37 se déclenchant en fonction de la requête interne, le démarrage moteur est contrôlé par le deuxième véhicule.

Selon une variante de réalisation, les variantes et exemples des opérations décrites en relation avec la figure 1 s'appliquent aux étapes du procédé de la figure 3.

Bien entendu, l'invention ne se limite pas aux modes de réalisation décrits ci-avant mais s'étend à un procédé de pilotage d'un deuxième véhicule par un premier véhicule appartenant à un groupement de véhicules par peloton et au dispositif configuré pour la mise en œuvre du procédé.

L'invention concerne également un véhicule, par exemple automobile ou plus généralement un véhicule à moteur terrestre, comprenant le dispositif 2 de la figure 2.

## Revendications

1. Procédé de contrôle de système d'arrêt-démarrage automatique de moteur dans un groupement de véhicules par peloton, ledit procédé comprenant les étapes suivantes :
- réception (31), par un premier véhicule (10) dudit groupement selon un mode de communication de type véhicule vers tout, dit V2X, de premières informations représentatives de cinématique d'au moins un deuxième véhicule (11, 12) dudit groupement ;
- obtention (32), par ledit premier véhicule (10), de deuxièmes informations représentatives d'un environnement dudit groupement ;
- transmission (33), par ledit premier véhicule (10) à destination dudit au moins un deuxième véhicule (11, 12) via ledit mode de communication V2X, d'au moins une requête de contrôle de système d'arrêt-démarrage automatique de moteur en fonction desdites premières informations et desdites deuxièmes informations.

2. Procédé selon la revendication 1, dans lequel ladite requête de contrôle correspond à :
- une requête d'arrêt moteur ; ou
- une requête de démarrage moteur.

3. Procédé selon la revendication 1 ou 2, dans lequel lesdites deuxièmes informations appartiennent à un ensemble d'informations comprenant :
- une information représentative d'un état d'un feu de signalisation ; et
- une information représentative de détection de véhicules environnants.

4. Procédé selon l'une des revendications 1 à 3, dans lequel ladite obtention (32) comprend :
- une détermination desdites deuxièmes informations à partir de données reçues d'au moins un capteur intégré audit premier véhicule (10) ; et/ou
- une réception, depuis ledit au moins un deuxième véhicule (11, 12), desdites deuxièmes informations selon ledit mode de communication V2X.

5. Procédé selon l'une des revendications 1 à 4, ledit procédé comprenant en outre les étapes suivantes :
- obtention (34), par ledit deuxième véhicule (11, 12), de troisièmes informations représentatives d'autorisation du contrôle dudit système d'arrêt-démarrage automatique de moteur, lesdites troisièmes informations étant obtenues de systèmes embarqués dans ledit deuxième véhicule (11, 12) ; et
- contrôle (35), par ledit deuxième véhicule (11, 12), dudit système d'arrêt-démarrage automatique de moteur dudit deuxième véhicule (11, 12) en fonction de ladite requête et desdites troisièmes informations.

6. Procédé selon la revendication 5 en dépendance de la revendication 2, dans lequel ladite requête de contrôle correspond à ladite requête d'arrêt moteur, ledit procédé comprenant en outre les étapes suivantes :
- réception (36), par ledit deuxième véhicule (11, 12), d'une requête interne de démarrage moteur, ladite requête interne étant émise par au moins un système embarqué dudit deuxième véhicule (11, 12) ; et
- contrôle (37), par ledit deuxième véhicule (11, 12), dudit démarrage moteur en fonction de ladite requête interne.

7. Dispositif (2) de contrôle de système d'arrêt-démarrage automatique de moteur dans un groupement de véhicules par peloton, ledit dispositif comprenant une mémoire (21) associée à au moins un processeur (20) configuré pour la mise en œuvre des étapes du procédé selon l'une quelconque des revendications 1 à 4.

8. Véhicule (10) comprenant le dispositif selon la revendication 7.

9. Programme d'ordinateur comportant des instructions adaptées pour l'exécution des étapes du procédé selon l'une des revendications 1 à 6, lorsque le programme d'ordinateur est exécuté par au moins un processeur.

## Patentansprüche

1. Verfahren zur Steuerung eines automatischen Start-Stopp-Systems eines Motors in einer Fahrzeuggruppierung pro Feld, wobei das Verfahren die folgenden Schritte umfasst:
- durch ein erstes Fahrzeug (10) der Gruppierung in einem fahrzeugartigen Kommunikationsmodus V2X erste kinematisch repräsentative Informationen von mindestens einem zweiten Fahrzeug (11, 12) der Gruppierung erhalten hat;
- das erste Fahrzeug (10) erhält (32) zweite Informationen, die für eine Umgebung des Clusters repräsentativ sind;
- Übertragung (33) von mindestens einer Anforderung zur Steuerung eines automatischen Motorstopp-Start-Systems durch das erste Fahrzeug (10) über den V2X-Kommunikationsmodus an das mindestens eine zweite Fahrzeug (11, 12) in Abhängigkeit von der ersten Information und der zweiten Information.

2. Verfahren nach Anspruch 1, wobei die Steueranforderung:
- einen Antrag auf Abschalten des Motors oder
- eine Motorstartanforderung.

3. Verfahren nach Anspruch 1 oder 2, wobei die zweite Information zu einem Satz von Information gehört, der Folgendes umfasst:
- eine Information, die für den Zustand einer Ampel repräsentativ ist; und
- repräsentative Informationen über die Erkennung umgebender Fahrzeuge.

4. Verfahren nach einem der Ansprüche 1 bis 3, wobei das Erhalten (32) umfasst:
- Bestimmung der zweiten Information aus Daten, die von mindestens einem Sensor empfangen werden, der in das erste Fahrzeug (10) integriert ist, und/oder
- eine Entgegennahme der zweiten Information von dem mindestens einen zweiten Fahrzeug (11, 12) gemäß dem V2X-Kommunikationsmodus.

5. Verfahren nach einem der Ansprüche 1 bis 4, wobei das Verfahren ferner die folgenden Schritte umfasst:
- Erlangung (34) dritter Informationen durch das zweite Fahrzeug (11, 12), die für die Genehmigung der Kontrolle des Motorstopp-Automatiksystems repräsentativ sind, wobei die dritten Informationen von Systemen in dem zweiten Fahrzeug (11, 12) erhalten werden, und
- Prüfung (35) des automatischen Motorstopp-Systems des zweiten Fahrzeugs (11, 12) durch das zweite Fahrzeug (11, 12) in Abhängigkeit von der Anfrage und der dritten Information.

6. Verfahren nach Anspruch 5 in Abhängigkeit von Anspruch 2, wobei die Steueranforderung der Motorabschaltanforderung entspricht, wobei das Verfahren ferner die folgenden Schritte umfasst:
- Empfang (36) einer internen Motorstartanforderung durch das zweite Fahrzeug (11, 12), wobei die interne Anforderung von mindestens einem Bordsystem des zweiten Fahrzeugs (11, 12) ausgegeben wird, und
- Prüfung (37) des Motorstarts durch das zweite Fahrzeug (11, 12) in Abhängigkeit von der internen Anforderung.

7. Vorrichtung (2) zur Steuerung eines automatischen Motorstopp-Start-Systems in einer Gruppe von Fahrzeugen pro Feld, wobei die Vorrichtung einen Speicher (21) umfasst, der mit mindestens einem Prozessor (20) verbunden ist, der zur Durchführung der Schritte des Verfahrens nach einem der Ansprüche 1 bis 4 konfiguriert ist.

8. Fahrzeug (10) mit der Vorrichtung nach Anspruch 7.

9. Computerprogramm mit Anweisungen, die zur Ausführung der Schritte des Verfahrens nach einem der Ansprüche 1 bis 6 geeignet sind, wenn das Computerprogramm von mindestens einem Prozessor ausgeführt wird.

## Claims

1. A method of controlling an automatic engine start-stop system in a platoon vehicle group, the method comprising the following steps:
- reception (31), by a first vehicle (10) of said grouping according to a vehicle type communication mode towards all, called V2X, of first information representative of kinematics of at least one second vehicle (11, 12) of said grouping;
- obtaining (32), by said first vehicle (10), second information representative of an environment of said grouping;
- transmission (33), by said first vehicle (10) to said at least one second vehicle (11, 12) via said V2X communication mode, of at least one request for checking an automatic engine stop-start system as a function of said first information and said second information.

2. The method according to claim 1, wherein said control request corresponds to:
- an engine shutdown request; or
- a request to start the engine.

3. Method according to claim 1 or 2, wherein said second information belongs to a set of information comprising:
- information representative of a status of a traffic light; and
- information representative of the detection of surrounding vehicles.

4. Process according to one of claims 1 to 3, in which the said obtaining (32) comprises:
- determining said second information from data received from at least one sensor integrated into said first vehicle (10); and/or
- reception, from said at least one second vehicle (11, 12) of said second pieces of information according to said V2X communication mode.

5. Process according to one of claims 1 to 4, the said process further comprising the following steps:
- obtaining (34), by said second vehicle (11, 12), third information representative of authorization of the control of said automatic engine stop-start system, said third information being obtained from systems onboard said second vehicle (11, 12); and
- control (35), by said second vehicle (11, 12) of said automatic engine stop-start system of said second vehicle (11, 12) as a function of said request and said third information.

6. A method according to claim 5, in conjunction with claim 2, in which said control request corresponds to said engine shutdown request, said method further comprising the following steps:
- receiving (36), by said second vehicle (11, 12), an internal engine start request, said internal request being emitted by at least one on-board system of said second vehicle (11, 12); and
- control (37), by said second vehicle (11, 12) of said engine starting according to said internal request.

7. Device (2) for controlling an automatic stop-start system of an engine in a group of vehicles by platoon, said device comprising a memory (21) associated with at least one processor (20) configured for implementing the steps of the method according to any one of claims 1 to 4.

8. Vehicle (10) comprising the device according to claim 7.

9. A computer program comprising instructions suitable for executing the steps of the method according to any one of claims 1 to 6, when the computer program is executed by at least one processor.
